Europäisches Patentamt

European Patent Office

Office européen des brevets

(19)

(11) **EP 0 795 857 B1**

(12) **FASCICULE DE BREVET EUROPEEN**

(45) Date de publication et mention
de la délivrance du brevet:
**25.07.2001 Bulletin 2001/30**

(51) Int Cl.⁷: **G11B 11/10**

(21) Numéro de dépôt: **97400559.7**

(22) Date de dépôt: **13.03.1997**

(54) **Support d'enregistrement magnéto-optique et procédé de réalisation**

Magneto-optisches Aufzeichnungsmedium und Verfahren zur Herstellung

Magneto-optical recording medium and production method

(84) Etats contractants désignés:
**DE FR GB IT**

(30) Priorité: **15.03.1996 FR 9603304**

(43) Date de publication de la demande:
**17.09.1997 Bulletin 1997/38**

(73) Titulaire: **COMMISSARIAT A L'ENERGIE
ATOMIQUE
75015 Paris (FR)**

(72) Inventeurs:
  • **Bechevet, Bernard**
    **38640 Claix (FR)**
  • **Daval, Jacques**
    **38240 Meylan (FR)**
  • **Valon, Bruno**
    **38100 Grenoble (FR)**
  • **Armand, Marie-Françoise**
    **38410 Vaulnaveys-Le-Haut (FR)**

(74) Mandataire: **Dubois-Chabert, Guy et al
BREVATOME
3, rue du Docteur Lanceraux
75008 Paris (FR)**

(56) Documents cités:
EP-A- 0 258 978          EP-A- 0 314 424
EP-A- 0 428 946          EP-A- 0 432 038
EP-A- 0 475 446          DE-A- 3 537 191

• **PATENT ABSTRACTS OF JAPAN vol. 018, no.
346 (P-1762), 29 Juin 1994 & JP 06 084213 A
(SEIKO EPSON CORP), 25 Mars 1994,**
• **PATENT ABSTRACTS OF JAPAN vol. 016, no.
256 (P-1368), 10 Juin 1992 & JP 04 061646 A
(PIONEER ELECTRON CORP), 27 Février 1992,**
• **PATENT ABSTRACTS OF JAPAN vol. 014, no.
167 (P-1031), 30 Mars 1990 & JP 02 023553 A
(CANON INC), 25 Janvier 1990,**
• **PATENT ABSTRACTS OF JAPAN vol. 009, no.
048 (P-338), 28 Février 1985 & JP 59 185052 A
(SEIKO DENSHI KOGYO KK), 20 Octobre 1984,**
• **PATENT ABSTRACTS OF JAPAN vol. 010, no.
384 (E-466), 23 Décembre 1986 & JP 61 174616 A
(HITACHI LTD), 6 Août 1986,**
• **PATENT ABSTRACTS OF JAPAN vol. 013, no.
096 (P-839), 7 Mars 1989 & JP 63 276728 A
(HITACHI LTD), 15 Novembre 1988,**
• **PATENT ABSTRACTS OF JAPAN vol. 012, no.
240 (P-727), 8 Juillet 1988 & JP 63 032748 A
(KONIKA CORP), 12 Février 1988,**
• **PATENT ABSTRACTS OF JAPAN vol. 015, no.
087 (P-1173), 28 Février 1991 & JP 02 302948 A
(FUJITSU LTD), 14 Décembre 1990,**
• **PATENT ABSTRACTS OF JAPAN vol. 018, no.
264 (P-1740), 19 Mai 1994 & JP 06 036371 A (TDK
CORP), 10 Février 1994,**
• **PATENT ABSTRACTS OF JAPAN vol. 016, no.
421 (P-1414), 4 Septembre 1992 & JP 04 141845
A (DAICEL CHEM IND LTD), 15 Mai 1992,**
• **PATENT ABSTRACTS OF JAPAN vol. 012, no.
114 (P-688), 12 Avril 1988 & JP 62 243150 A
(SHARP CORP), 23 Octobre 1987,**

## Description

### Domaine technique

La présente invention a pour objet un support d'enregistrement magnéto-optique et un procédé de réalisation de ce support.

L'invention trouve une application dans l'enregistrement magnéto-optique, que ce soit sur disque, sur bande ou sur tout autre substrat.

### Etat de la technique antérieure

L'enregistrement magnéto-optique consiste à créer dans une couche magnétique appropriée des domaines magnétiques orientés perpendiculairement au plan de la couche (opération d'écriture) et à mesurer ensuite la rotation du plan de polarisation subie par un faisceau lumineux à la traversée de cette couche (opération de lecture).

Dans les premières versions de ces dispositifs d'enregistrement, pour ré-écrire une information dans une zone déjà décrite, il fallait commencer par effacer ladite zone. Pour éviter cette étape intermédiaire, qui entraînait un allongement du temps d'accès, il a été suggéré d'utiliser des empilements de diverses couches magnétiques dont les propriétés magnétiques (notamment la température de Curie et le champ coercitif) sont telles qu'un processus dit de "sur-écriture directe", soit possible (en anglais "Direct Over Writing" ou DOW en abrégé).

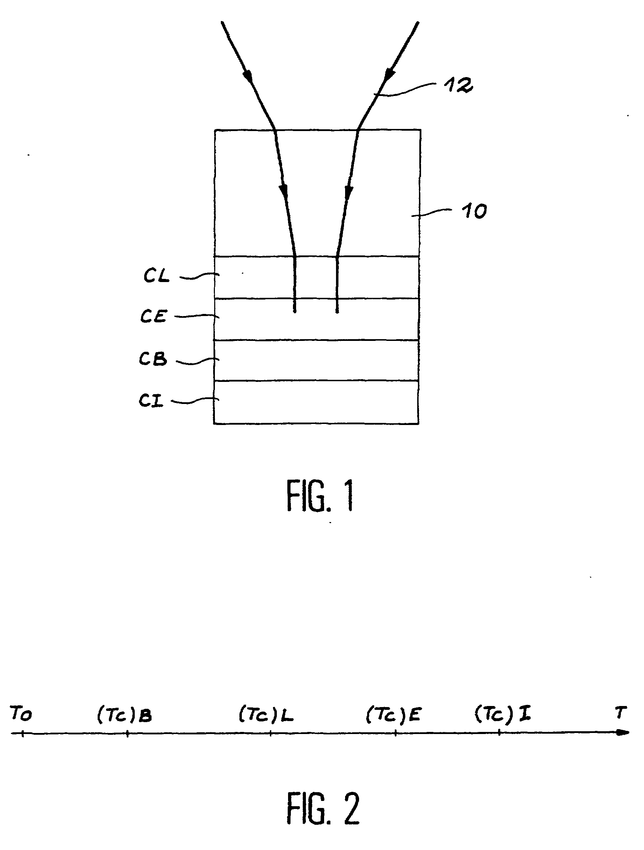

La figure 1 montre un exemple d'empilement connu de ce type. Cet empilement comprend une couche de lecture CL, une couche d'écriture CE, une couche de basculement CB et une couche d'initialisation CI. L'empilement repose sur un substrat 10, par exemple en verre. Un faisceau laser 12 vient lire et/ou écrire des informations dans la couche CL.

Les matériaux utilisés dans de tels empilements sont des composés de terre-rare (notée par la suite TR) et de métal de transition (MT) avec, éventuellement, un métal supplémentaire. La terre-rare et le métal de transition sont choisis de telle sorte que les températures de Curie des composés s'étagent comme indiqué sur la figure 2 où To est la température ambiante, (Tc)B la température de Curie de la couche de basculement CB, (TC)L la température de Curie de la couche de lecture CL, (Tc)E la température de Curie de la couche d'écriture CE et enfin (Tc)I la température de Curie de la couche d'initialisation CI.

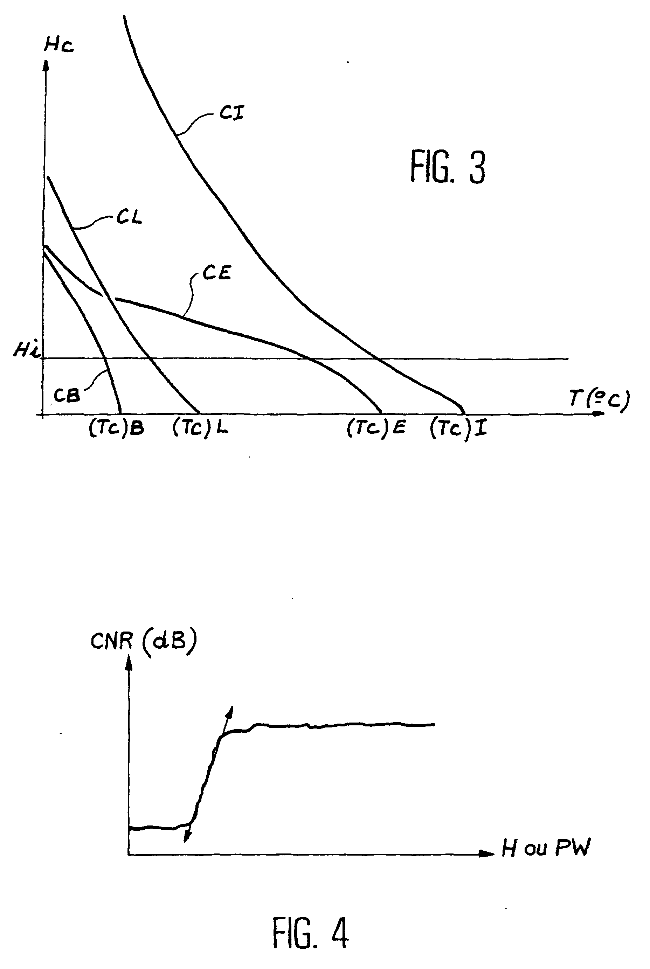

Quant au champ coercitif Hc des couches, il varie en fonction de la température comme indiqué sur la figure 3. L'ordonnée Hi représente le champ d'initialisation du lecteur.

On peut montrer alors qu'en portant les couches successivement à des températures appropriées, d'abord comprises entre (Tc)B et (Tc)L, puis, le cas échéant, entre (Tc)L et (Tc)E, on peut ré-écrire dans la couche CL tout élément binaire d'information (0 ou 1), quel que soit l'élément binaire qui s'y trouvait déjà. Les variations de température nécessaires sont obtenues en modulant l'intensité du faisceau lumineux. Ce processus se déroule en présence d'un champ magnétique de polarisation fourni par le lecteur.

On peut trouver une description de ces structures et de ce processus par exemple dans l'article intitulé "Exchange-Coupled Multilayer Films for Direct Overwrite in Magneto-Optical Disk" de K. TSUTSUMI publié dans IEEE Translation Journal on Magnetics in Japan, vol. 7, n°8, August 1992, pp. 645-653.

D'autres empilements sont également connus qui utilisent six couches au lieu de quatre. Les couches supplémentaires permettent de s'affranchir du champ magnétique extérieur de polarisation.

Diverses couches de diélectrique, de résine, de matériau réfléchissant, etc. peuvent être ajoutées à l'empilement magnétique de base.

La technique magnéto-optique est utilisée aujourd'hui dans l'élaboration des disques MD "Mini discs" pour l'aplication audio, et des disques 3"1/2 et 5"1/4, de capacité allant de 120 MO (méga-octet) au GO (giga-octet) pour les applications informatiques. Ces disques répondent à un cahier des charges très précis (Rainbow book pour le MD et normes ISO/IEC pour les disques informatiques). Est défini entre autres, un rapport Signal sur Bruit (CNR ou "Carrier to Noise Ratio" en anglais) en fonction de la température ou du champ d'écriture appliqué. De ce paramètre est déduite une sensibilité du matériau au déclenchement de l'écriture. La figure 4 annexée montre ainsi l'allure de ce rapport signal sur bruit (CNR) en fonction du champ appliqué H. La pente de la transition reflète la sensibilité du spport.

On a pensé régler certaines caractéristiques des couchés magnétiques en ajoutant de l'azote ou de l'oxygène en proportion appropriée, à certaines couches.

Par exemple, EP-A-0 314 424 enseigne qu'on peut ajouter de l'oxygène.

Les abrégés de brevet japonais vol. 018, n° 264 (P. 1740) et vol. 18, n° 346 (P. 1762) enseignent que l'on peut ajouter, à l'argon utilisé dans l'opération de pulvérisation cathodique, de l'oxygène ou de l'azote.

Cependant, ces corps (oxygène et azote) présentent des inconvénients. S'agissant de l'oxygène, les propriétés magnétiques des couches y sont assez peu sensibles, de sorte que les concentrations utilisées doivent être assez élevées. Il en résulte des problèmes de vieillissement.

Pour ce qui est de l'azote, au contraire, la sensibilité des couches est très grande de sorte qu'il est difficile de contrôler les propriétés des couches. Par ailleurs, l'azote étant présent dans l'atmosphère, il peut entrer dans les cibles et dans les enceintes de manière incontrôlable.

La présente invention a justement pour but de remédier à ces inconvénients en proposant d'utiliser un autre gaz que l'azote et l'oxygène pour jouer sur les propriétés des couches de l'empilement. L'invention propose d'utiliser le fluor.

Le document JP-A-62 243 150 décrit un élément mémoire magnéto-optique comprenant un substrat, .une sous-couche, et une couche en un alliage de métal de transition et de terre rare sous forme amorphe. Avant de déposer la couche sur la sous-couche, celle-ci est gravée par pulvérisation en présence de gaz, par exemple $CF_4$ ou $CHF_3$. Le but de cette technique est de réduire le temps de gravure de la sous-couche.

Le document JP-A-63-276 728 décrit des matériaux pour l'enregistrement magnéto-optique de formule générale **M**a**N**b**T**c**O**d où N correspond à B, C, Si, N, F et P, l'indice b étant compris entre 0 et 50.

Le document JP-A-04 061 646 décrit un disque magnéto-optique dans lequel on incorpore, dans une couche mince de matériau magnétique, de l'azote, du bore ou du fluor.

Le document JP-A-61 174 616 décrit un procédé de réalisation d'un film mince magnétique amorphe. On procède par pulvérisation haute-fréquence en constituant une cible comprenant une terre rare et un métal de transition. La pulvérisation s'effectue en présence de gaz constitué par exemple d'oxygène, d'azote, de chlore, de fluor.

Le document JP-A-02 023 553 décrit une couche d'enregistrement magnéto-optique de formule $R_xT_yF_z$ où R est une terre rare, T un métal de transition et F le fluor. Le pourcentage z est compris entre 15 et 70.

L'invention propose d'utiliser le fluor en faible concentration pour ajuster les propriétés magnéto-optiques de l'empilement. Sans fluor, toutes les couches auraient mêmes compositions, donc mêmes propriétés.

## Exposé de l'invention

De façon précise, l'invention a pour objet un support d'enregistrement magnéto-optique comprenant un empilement de couches magnétiques en composé (TR-MT) d'au moins une terre rare (TR) et d'au moins un métal de transition (MT), caractérisé par le fait que ces couches magnétiques sont à base d'un même composé (TR-MT) et qu'au moins une ce ces couches contient du fluor en proportion inférieure à quelques pourcents, les compositions de ces couches ne différant ainsi les unes des autres que par la proportion de fluor.

La concentration en fluor peut être, par exemple, d'environ 0,5 % ou d'environ de 0,25 %, ou d'environ 0,1 %.

Selon un mode de réalisation, on utilise deux composés de base différents. Une première catégorie de couches est à base d'un premier composé (TR-MT)1 de terre-rare et de métal de transition, certaines couches comprenant en outre du fluor et une seconde catégorie de couches est à base d'un second composé (TR-MT)2 de terre-rare et de métal de transition, certaines couches comprenant en outre le fluor.

Tout type d'empilement peut être utilisé selon l'invention, notamment des empilements à 2, 4 ou 6 couches.

S'agissant des matériaux, tout matériau connu ou à venir peut être utilisé. De préférence, la terre-rare (TR) est prise dans le groupe comprenant Tb, Gd, Dy, Nd et Pr. Un composé peut comprendre une ou plusieurs terre-rares (par exemple Tb et Dy).

Le métal de transition (MT) est également quelconque et peut être Fe ou Co par exemple.

Le composé peut comprendre en outre un métal comme Cr, Ti, Mo.

La présente invention a également pour objet un procédé de réalisation d'un support d'enregistrement conforme à la définition qui vient d'être donnée, dans lequel on dépose sur un substrat des couches magnétiques en procédant par pulvérisation cathodique d'au moins un composé (TR-MT) comprenant au moins une terre rare (TR) et au moins un métal de transition (MT) en présence d'un gaz inerte, caractérisé par le fait qu'on utilise une seule cible de composé déterminé (TR-MT) et que, lors du dépôt d'au moins une des couches de l'empilement, on ajoute au gaz inerte du fluor en proportion inférieure à quelques pourcents.

Le fluor peut être introduit dans l'enceinte de pulvérisation sous forme de CF4, par exemple, ou de SF6 ou même de fluor pur.

La proportion de fluor peut être inférieure à 1%, par exemple de l'ordre de 0,5% ou de 0,25 %, voire de 0,1 %.

On observera que, dans l'invention, l'introduction de fluor n'est pas destinée à produire une réaction chimique d'un matériau déjà déposé mais d'ajouter à un composé une certaine quantité de fluor, au moment même où ce composé est déposé. Selon l'invention, on ne traite pas chimiquement la surface d'une couche, mais on répartit le fluor de manière homogène dans la totalité du volume de la couche.

**EP 0 795 857 B1**

**Brève description des dessins**

- la figure 1, déjà décrite, représente un empilement connu ;
- la figure 2, déjà décrite, montre la répartition des températures de Curie des différentes couches de l'empilement précédent ;
- la figure 3, déjà décrite, montre les variations du champ coercitif des couches en fonction de la température ;
- la figure 4, déjà décrite, montre la courbe du rapport signal sur bruit en fonction du champ ;
- la figure 5 illustre un exemple de réalisation d'un support d'enregistrement conforme à l'invention ;
- la figure 6 montre la répartition des températures de Curie dans le cas de l'exemple précédent ;
- la figure 7 montre les variations de la température de Curie et de la température de compensation ;
- la figure 8 montre un premier cas de variations du champ coercitif Hc en fonction de la température pour différentes proportions de CF4 ;
- la figure 9 montre un second cas de variations du champ coercitif Hc en fonction de la température pour différentes proportions de CF4 ;
- Les figures 10a, 10b, 10c montrent les courbes du rapport signal sur bruit pour trois pourcentages de CF4 ;
- la figure 11 montre schématiquement un empilement à deux compositions de base différentes.

**Exposé détaillé de modes de réalisation**

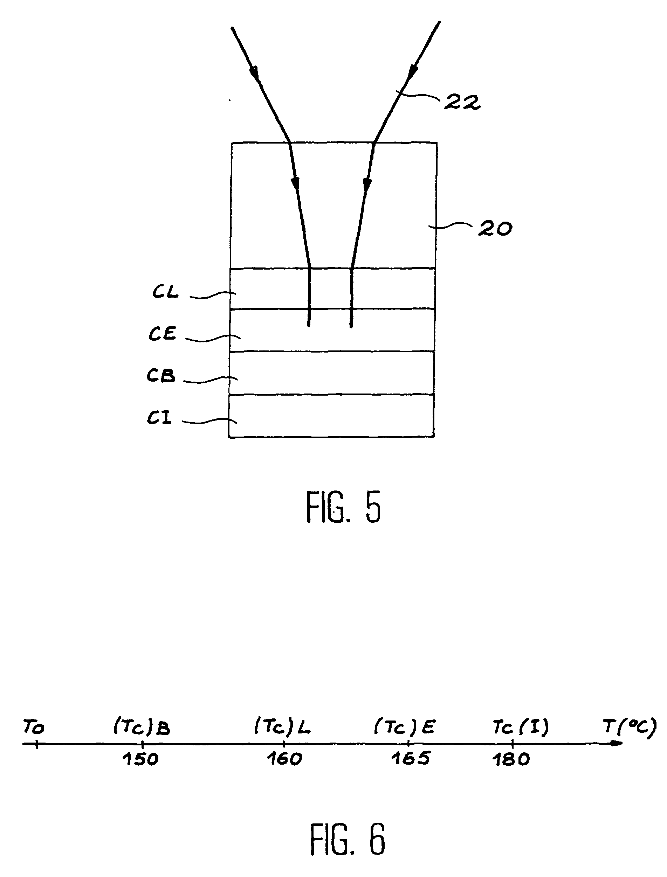

La figure 5 montre un exemple de réalisation d'un support d'enregistrement conforme à l'invention. Dans cet exemple, l'empilement comprend quatre couches déposées sur un substrat 20 : une couche de lecture CL, une couche d'écriture CE, une couche de basculement CB et une couche d'initialisation CI. Des couches éventuelles de diélectrique, de résine, etc... ne sont pas représentées. Le support est lu et écrit par un faisceau laser 22.

Un tel support peut être obtenu en disposant, dans une installation de pulvérisation cathodique, une seule cible de composé (TR-MT). Une arrivée de fluor à débit réglable s'ajoute à l'entrée d'argon habituelle. A titre d'exemple, le demandeur a utilisé une cible de $Tb_{24}Fe_{68}Co_8$. Les pourcentages de CF4 dans l'argon étaient les suivants, selon les couches déposées :

| Dépôt de la couche d'initialisation (CI) | 0% |
| Dépôt de la couche de basculement (CB) | 0,5% |
| Dépôt de la couche d'écriture (CE) | 0,25% |
| Dépôt de la couche de lecture (CL) | 0,375% |

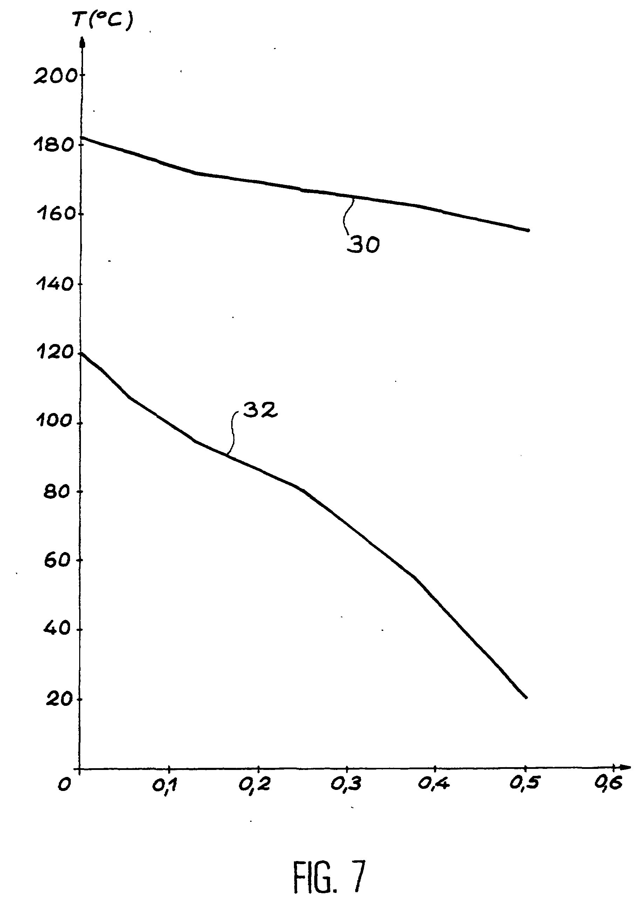

Les températures de Curie obtenues pour les couches obtenues sont représentées le long de l'axe de la figure 6. Ces températures sont respectivement de150°C, 160°C, 165°C, 180°C. On constate qu'elles sont bien dans l'ordre requis pour la sur-écriture directe, à savoir :

$$(Tc)B < (Tc)L < (Tc)E < (Tc) I$$

La composition des couches elles-mêmes peut être déterminée par des analyses physicochimiques classiques, par exemple par "Nuclear Reaction Analysis" ou NRA en abrégé ou "Secondary Ion Mass Spectroscopy" ou SIMS en abrégé.

La figure 7 montre les variations de la température de Curie (courbe 30) et de la température de compensation (courbe 32) en fonction du pourcentage de CF4 introduit dans l'enceinte, pour le composé $Tb_{24}FeCo_8$.

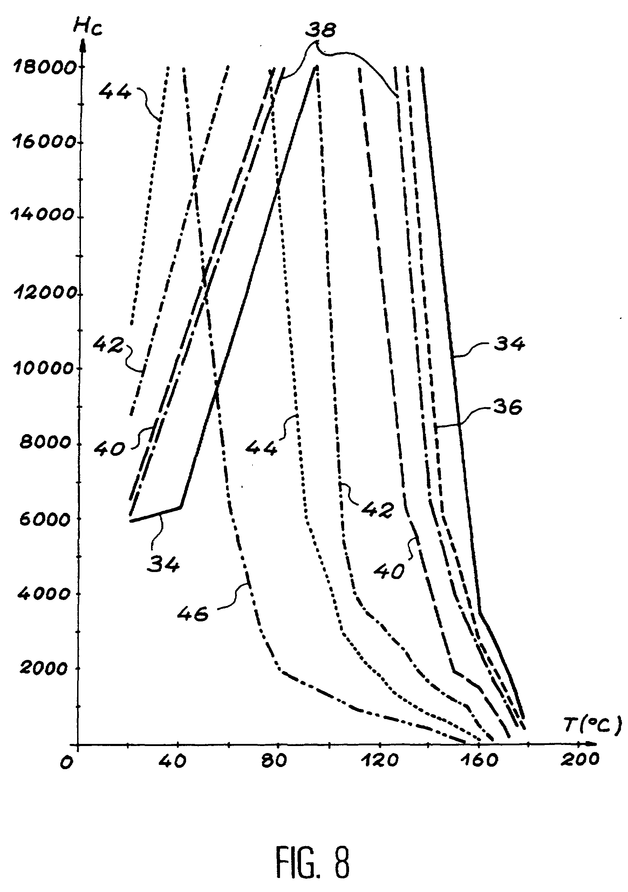

La figure 8 montre les variations du champ coercitif Hc en fonction de la température pour différentes proportions de CF4 introduites dans l'enceinte, pour le composé $Tb_{24}FeCo_8$.

La correspondance entre les courbes et les pourcentages de CF4 est la suivante :

- courbe 34 : 0 %
- courbe 36 : 0,025 %
- courbe 38 : 0,05 %
- courbe 40 : 0,125 %
- courbe 42 : 0,25 %
- courbe 44 : 0,375 %

**4**

- courbe 46 : 0,5 %

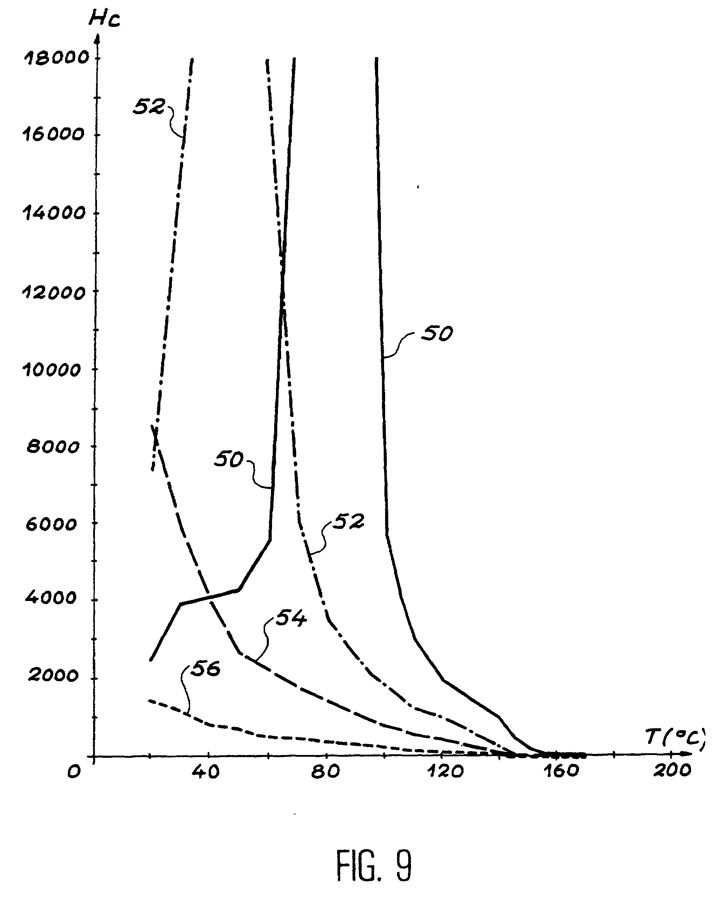

La figure 9 montre les variations du champ coercitif Hc en fonction de la température pour différentes proportions de CF4 introduites dans l'enceinte, pour le composé Dy22,5Fe50,5Co22.

- courbe 50 : 0 %
- courbe 52 : 0,125 %
- courbe 54 : 0,25 %
- courbe 56 : 0, 5 %

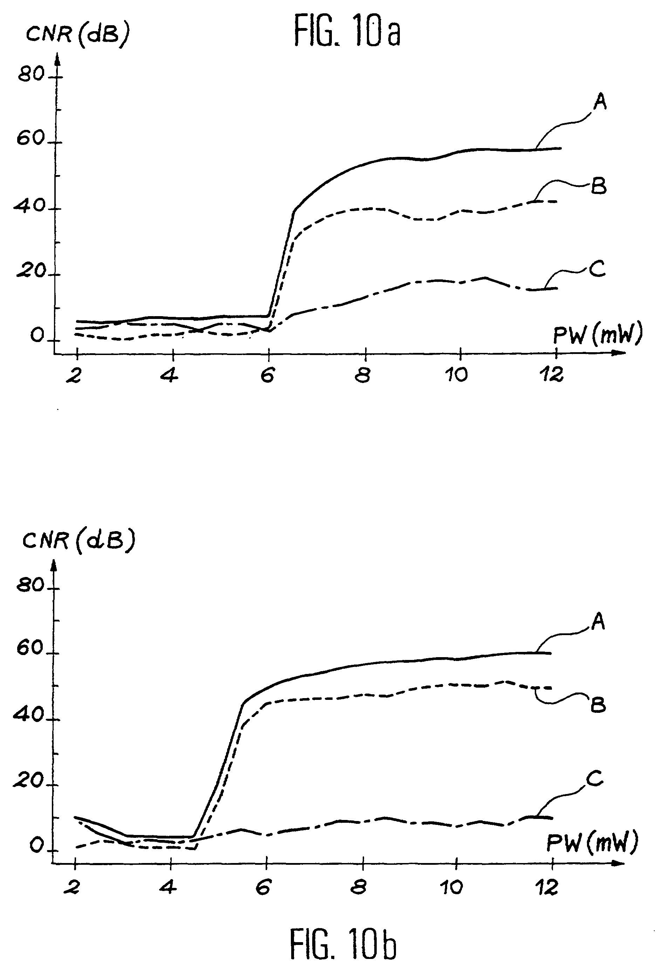

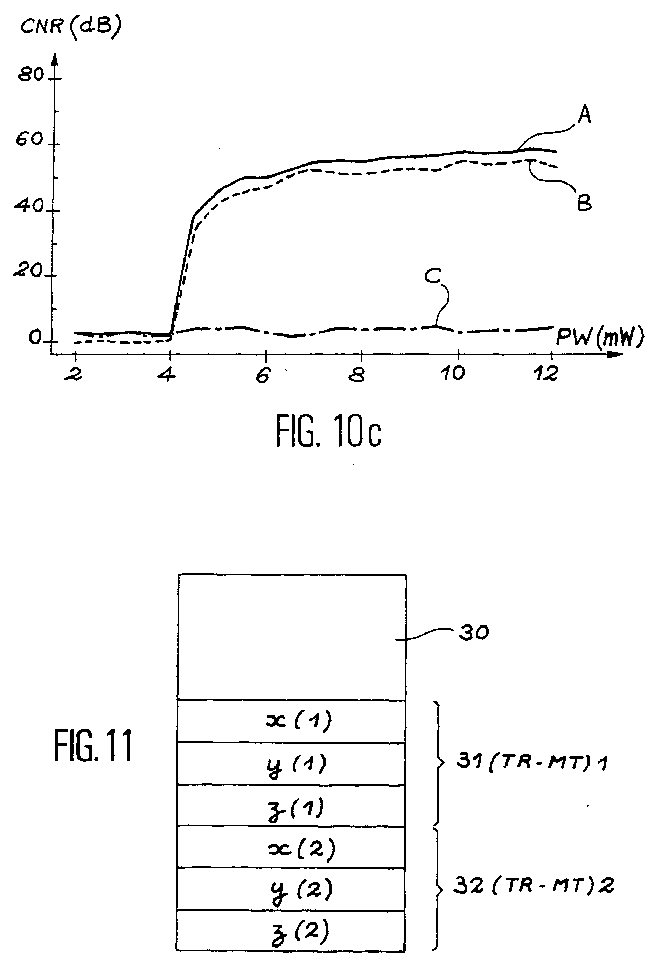

Les figures 10a, 10b, 10c montrent les variations du rapport signal sur bruit CNR, exprimé en dB, en fonction de la puissance d'écriture PW, exprimée en mW, pour trois concentrations du gaz CF4 introduit dans le gaz d'argon. Ces trois concentrations sont respectivement 0 (c'est-à-dire qu'il n'y avait pas de trace décelable de fluor, ce qui correspond à l'état de la technique antérieure), 0,25 % et 0,5 %.

Sur ces graphiques, les courbes A représentent le signal, les courbes B, le rapport signal sur bruit et les courbes C le bruit après écriture.

Ces courbes montrent bien l'augmentation du rapport signal sur bruit résultant de l'introduction de CF4, l'augmentation de sensibilité et la diminution du seuil d'apparition du signal. L'augmentation du rapport signal sur bruit est dû en grande partie à la diminution du niveau de bruit. Quant à la pente, exprimant la sensibilité, elle double en passant de 20 dB/mW à 40 dB/mWS.

Ces mesures ont été faites dans les conditions suivantes :

- Empilement : Si3N4/TR-MT/Si3N4/AlTi
- Epaisseurs : 105/30/20/800 nm
- Composition de la TR-MT : $Tb_{24}Fe_{66}Co_{10}$
- Substrats : verre Glaverbel, diamètre 90 mm(3"1/2)

Les vitesses de dépôt étaient, respectivement, d'environ, 0,2 nm/s pour Si3N4, 0,1 nm/s pour TbFeCo, 0,3 nm/s pour AlTi. La machine de pulvérisation utilisait la technique des "cibles face à face" pour éviter au substrat plastique gravé de trop chauffer. Toute autre machine "basse température peut convenir (par exemple la machine Balzers-SDS 100). Pour les besoins de la mesure, les substrats utilisés étaient en verre Glaverbel et non gravés, afin d'éviter les problèmes dûs aux conditions de pressage. La pulvérisation du dépôt de TR-MT s'est effectuée sous atmosphère d'argon, à laquelle on a ajouté avec précision, une certaine quantité de gaz CF4. Pour cela deux lignes de gaz étaient utilisées en amont de l'enceinte : une ligne d'argon pur et une ligne pour un mélange d'argon et de CF4 à 1 %, contrôlées chacune par un débitmètre. Le réglage respectif des deux débitmètres permettait de faire varier continuement le mélange entrant dans l'enceinte de pulvérisation.

La figure 11 montre un empilement à six couches. Une première catégorie de trois couches est à base d'un premier composé (TR-MT)1 avec des proportions de fluor variables x(1), y(1), z(1), et une seconde catégorie de trois autres couches à base d'un second composé (TR-MT)2 avec encore des proportions de fluor variables x(2), y(2), z (2).

A titre d'exemple, le premier composé peut être TbFeCo et le second GdFeCo.

Les supports qui viennent d'être décrits se prêtent naturellement à toutes les techniques de lecture et d'écriture connues avec les autres types de support, par exemple à la technique dite de "super résolution magnétique" (ou "Magnetic Super Resolution" en anglais, ou MSR en abrégé).

**Revendications**

1. Support d'enregistrement magnéto-optique comprenant un empilement de couches magnétiques en composé (TR-MT) d'au moins une terre-rare (TR) et d'au moins un métal de transition (MT), caractérisé par le fait que ces couches magnétiques sont à base d'un même composé (TR-MT) et qu'au moins une de ces couches contient du fluor en proportion inférieure à quelques pourcents, les compositions de ces couches ne différant ainsi les unes aux autres que par la proportion de fluor.

2. Support d'enregistrement selon la revendication 1, dans lequel l'empilement comprend au moins quatre couches, avec successivement une couche de lecture (CL), une couche d'écriture (CE), une couche de basculement (CB) et une couche d'initialisation (CI), ces quatre couches (CL, CE, CB, CI) étant en un même composé (TR-MT) de terre-rare (TR) et de métal de transition (MT), dans lequel la couche d'initialisation (CI) a une proportion en fluor inférieure à celle de la couche de lecture (CL), cette couche de lecture (CL) ayant elle-même une proportion en fluor inférieure à celle de la couche de basculement (CB).

3. Support d'enregistrement selon la revendication 2, dans lequel la couche d'initialisation (CI) ne contient pas de fluor.

4. Support d'enregistrement selon la revendication 1, dans lequel une première catégorie de couches est à base d'un premier composé (TR-MT)1 de terre-rare et de métal de transition, avec certaines couches comprenant en outre du fluor et une seconde catégorie de couches à base d'un second composé (TR-MT) 2 de terre-rare et de métal de transition avec certaines couches comprenant en outre du fluor.

5. Support d'enregistrement selon l'une quelconque des revendications 1 à 4, dans lequel la concentration en fluor est inférieure à 1 %.

6. Support d'enregistrement selon la revendication 5, dans lequel la concentration en fluor est d'environ 0,5 %.

7. Support d'enregistrement selon la revendication 5, dans lequel la concentration en fluor est d'environ 0,25 %.

8. Support d'enregistrement selon l'une quelconque des revendications 1 à 7, dans lequel la terre-rare (TR) est prise dans le groupe constitué par Tb, Gd, Dy, Nd et Pr.

9. Support d'enregistrement selon l'une quelconque des revendications 1 à 8, dans lequel le métal de transition (MT) est pris dans le groupe constitué par Fe et Co.

10. Support d'enregistrement selon l'une quelconque des revendications 1 à 9, dans lequel le composé (TR-MT) à base de terre-rare (TR) et de métal de transition (MT) comprend en outre un métal pris dans le groupe constitué par Cr, Ti, Mo.

11. Procédé de réalisation d'un support d'enregistrement conforme à la revendication 1, dans lequel on dépose sur un substrat des couches magnétiques en procédant par pulvérisation cathodique d'au moins un composé (TR-MT) comprenant au moins une terre-rare (TR) et au moins un métal de transition (MT) en présence d'un gaz inerte, caractérisé par le fait qu'on utilise une seule cible de composé déterminé (TR-MT) et que, lors du dépôt d'au moins une des couches de l'empilement, on ajoute au gaz inerte du fluor en proportion inférieure à quelques pourcents.

12. Procédé selon la revendication 11, dans lequel la proportion du fluor dans le gaz inerte est inférieure à 1%.

13. Procédé selon la revendication 12, dans lequel la proportion de fluor dans le gaz inerte est d'environ 0,5%.

14. Procédé selon la revendication 12, dans lequel la proportion de fluor dans le gaz inerte est d'environ 0,25%.

15. Procédé selon la revendication 11, dans lequel on ajoute au gaz inerte du CF4.

16. Procédé selon la revendication 13, dans lequel on ajoute au gaz inerte du SF6.

**Claims**

1. Magneto-optical recording medium comprising a stack of magnetic layers of (TR-MT) compound of at least one rare earth (TR) and at least one transition metal (MT), characterized in that these magnetic layers are based on the same compound (TR-MT) and that at least one of these layers contains fluorine in a proportion lower than a few per cent, so that the compositions of these layers only differ from one another by the fluorine proportion.

2. Recording medium according to claim 1, wherein the stack comprises at least four layers, with successively a reading layer (CL), a writing layer (CE), a switching layer (CB) and an initialization layer (CI), these four layers (CL, CE, CB, CI) being of the same compound (TR-MT) of rare earth (TR) and transition metal (MT), in which the initialization layer (CI) has a fluorine proportion lower than that of the reading layer (CL), said reading layer (CL) itself having a fluorine proportion lower than that of the switching layer (CB).

3. Recording medium according to claim 2, wherein the initialization layer (CI) contains no fluorine.

**4.** Recording medium according to claim 1, wherein a first category of layers is based on a first compound (TR-MT) 1 of rare earth and transition metal, with certain layers also incorporating fluorine and a second category of layers based on a second compound (TR-MT)2 of rare earth and transition metal with certain layers also incorporating fluorine.

**5.** Recording medium according to any one of the claims 1 to 4, wherein the fluorine concentration is below 1%.

**6.** Recording medium according to claim 5, wherein the fluorine concentration is approximately 0.5%.

**7.** Recording medium according to claim 5, wherein the fluorine concentration is approximately 0.25%.

**8.** Recording medium according to any one of the claims 1 to 7, wherein the rare earth (TR) is chosen from within the group constituted by Tb, Gd, Dy, Nd and Pr.

**9.** Recording medium according to any one of the claims 1 to 8, wherein the transition metal (MT) is chosen from within the group constituted by Fe and Co.

**10.** Recording medium according to any one of the claims 1 to 9, wherein the compound (TR-MT) based on rare earth (TR) and transition metal (MT) also comprises a metal chosen from within the group constituted by Cr, Ti and Mo.

**11.** Process for producing a recording medium according to claim 1, wherein deposition takes place on a substrate of magnetic layers whilst cathodically sputtering at least one compound (TR-MT) incorporating at least one rare earth (TR) and at least one transition metal (MT) in the presence of an inert gas, characterized in that use is made of a single given compound target (TR-MT) and that, during the deposition of at least one of the layers of the stack, to the inert gas is added fluorine in a proportion lower than a few per cent.

**12.** Process according to claim 11, wherein the fluorine proportion in the inert gas is below 1%.

**13.** Process according to claim 12, wherein the fluorine proportion in the inert gas is approximately 0.5%.

**14.** Process according to claim 12, wherein the fluorine proportion in the inert gas is approximately 0.25%.

**15.** Process according to claim 11, wherein CF4 is added to the inert gas.

**16.** Process according to claim 11, wherein SF6 is added to the inert gas.

**Patentansprüche**

**1.** Magneto-optisches Aufzeichnungsmedium mit einem Stapel magnetischer Schichten (TR-MT) einer Verbindung aus wenigstens einem Seltenerdmetalloxid (TR) und wenigstens einem Übergangsmetall (MT),
**dadurch gekennzeichnet,**
dass die magnetischen Schichten auf einer selben Verbindung (TR-MT) beruhen und wenigstens eine dieser Schichten Fluor mit einem Anteil enthält, der niedriger als einige Prozent ist, wobei sich die Zusammensetzung dieser Schichten untereinander also nur durch den Fluor-Anteil unterscheidet.

**2.** Aufzeichnungsmedium nach Anspruch 1, bei dem der Stapel wenigstens vier Schichten umfasst, mit nacheinander einer Leseschicht (CL), einer Schreibschicht (CE), einer Kippschicht (CB) und einer Initialisierungsschicht (CI), wobei diese vier Schichten (CL, CE, CB, CI) aus einer selben Verbindung (TR-MT) aus Seltenerdmetalloxid (TR) und Übergangsmetall (MT) sind, und bei dem die Initialisierungsschicht (CI) einen Fluoranteil hat, der niedriger als derjenige der Leseschicht (CL) ist und diese Leseschicht (CL) selbst einen Fluoranteil hat, der niedriger als derjenige der Kippschicht (CB) ist.

**3.** Aufzeichnungsmedium nach Anspruch 2, bei dem die Initialisierungsschicht (CI) kein Fluor enthält.

**4.** Aufzeichnungsmedium nach Anspruch 1, bei dem eine erste Kategorie von Schichten auf einer ersten Verbindung (TR-MT) aus Seltenerdmetalloxid und Übergangsmetall beruht, mit bestimmten Schichten, die außerdem Fluor enthalten, und eine zweite Kategorie von Schichten auf einer zweiten Verbindung (TR-MT)2 aus Seltenerdmetalloxid und Übergangsmetall mit bestimmten, außerdem Fluor enthaltenden Schichten beruht.

5. Aufzeichnungsmedium nach einem der Ansprüche 1 bis 4, bei dem die Fluorkonzentration niedriger als 1% ist.

6. Aufzeichnungsmedium nach Anspruch 5, bei dem die Fluorkonzentration ungefähr 0,5% beträgt.

7. Aufzeichnungsmedium nach Anspruch 5, bei dem die Fluorkonzentration ungefähr 0,25% beträgt.

8. Aufzeichnungsmedium nach einem der Ansprüche 1 bis 7, bei dem das Seltenerdmetalloxid (TR) aus der Gruppe gewählt wird, die Tb, Gd, Dy, Nd und Pr enthält.

9. Aufzeichnungsmedium nach einem der Ansprüche 1 bis 8, bei dem das Übergangsmetall (MT) aus der Gruppe gewählt wird, die durch Fe und Co gebildet wird.

10. Aufzeichnungsmedium nach einem der Ansprüche 1 bis 9, bei dem die auf dem Seltenerdmetalloxid (TR) und dem Übergangsmetall MT) beruhende Verbindung (TR-MT) außerdem ein Metall umfasst, das aus der durch Cr, Ti, Mo gebildeten Gruppe gewählt wird.

11. Verfahren zur Herstellung eines Aufzeichnungsmediums nach Anspruch 1, bei dem man auf einem Substrat durch Sputtern wenigstens eine magnetische Schicht aus einer Verbindung (TR-MT) abscheidet, die wenigstens ein Seltenerdmetalloxid und wenigstens ein Übergangsmetall (MT) in Gegenwart eines inerten Gases umfasst, **dadurch gekennzeichnet**, dass man ein einziges Target aus einer bestimmten Verbindung (TR-MT) verwendet, und dass man beim Abscheiden wenigstens einer der Schichten des Stapels dem inerten Gas Fluor mit einem Anteil von unter einigen Prozent hinzufügt.

12. Verfahren nach Anspruch 11, bei dem der Anteil des Fluor in dem inerten Gas niedriger als 1% ist.

13. Verfahren nach Anspruch 12, bei dem der Fluoranteil in dem inerten ungefähr 0,5% beträgt.

14. Verfahren nach Anspruch 12, bei dem der Fluoranteil in dem inerten ungefähr 0,25% beträgt.

15. Verfahren nach Anspruch 11, bei dem man dem inerten Gas CF4 beimengt.

16. Verfahren nach Anspruch 11, bei dem man dem inerten Gas CF6 beimengt.

FIG. 1

FIG. 2

FIG. 3

FIG. 4

CL

CE

CB

CI

22

20

FIG. 5

$T_0$  $(T_c)B$  $(T_c)L$  $(T_c)E$  $T_c(I)$  $T(°C)$

150  160  165  180

FIG. 6

FIG. 7

FIG. 8

FIG. 9

# FIG. 10a

# FIG. 10b

FIG. 10c

FIG. 11